# EUROPEAN PATENT APPLICATION

(11) **EP 4 527 636 A1**
(43) Date of publication of application: **26.03.2025**
(21) Application number: 23807451.2
(22) Date of filing: 02.05.2023
(51) Int. Cl.: B43K 7/02, B32B 9/06

(54) **INK CONTAINING MEMBER FOR WRITING UTENSILS**

(30) Priority: 19.05.2022 JP 2022082312
(71) Applicant: Mitsubishi Pencil Company, Limited, Tokyo 140-8537 (JP)
(72) Inventor: ICHIKAWA, Shuji, Tokyo 140-8537 (JP); TANAKA, Saki, Tokyo 140-8537 (JP); TAKADA, Koji, Tokyo 140-8537 (JP)
(74) Representative: Vossius & Partner Patentanwälte Rechtsanwälte mbB
(86) International application number: PCT/JP2023/017162
(87) International publication number: WO 2023/223844

(57) **Abstract**

The present invention provides an ink storage member for writing implements that further reduces the environmental impact by replacing the conventional aluminum with silica for the intermediate layer between the inner and the outer layer, both of which use paper as a base material, in a paper refill for writing implements. An ink storage member for writing implements has at least three layers, including an inner layer of a paper base material, an intermediate layer formed on an outer surface of the inner layer, and an outer layer of the paper base material formed on an outer surface of the intermediate layer, wherein the intermediate layer has at least one layer selected from the group consisting of an aluminum oxide film layer, a silica film layer formed from a low molecular weight silane, and a silica film layer formed from a polysilazane.

## Description

### Technical Field

The present invention relates to an ink storage member for writing implements using a paper material.

### Background Art

Conventionally, a transparent or translucent plastic such as polypropylene has been used for an ink storage member for writing implements such as ballpoint pens. In recent years, there has been an increasing tendency to address global environmental problems by, for example, abstaining from the use of plastics, and proposals focusing on the removal of plastics have also been made for each component constituting a writing implement.

For example, Patent Literature 1 discloses an ink storage member for writing implements using an ink storage tube having a multilayer structure in which one or two or more other resin layers are formed inside a storage tube base formed from a biodegradable resin. According to this, it is described that since the storage tube base formed from the biodegradable resin is biodegraded with the passage of time, the storage tube base can contribute to a reduction in the amount of waste.

On the other hand, there has also been proposed a writing implement including a barrel obtained by using a composite material in which a synthetic resin having a barrier property or a metal such as aluminum is laminated on paper as a base material and spirally molding the composite material (Patent Literature 2).

In order to improve water resistance and gas barrier properties, this barrel has a structure in which two layers of an aluminum foil label paper whose back surface is made of kraft paper and a liner paper are laminated from the outer surface side of the barrel, and a polyethylene layer is further laminated on the inner surface, and then a polyester film having an aluminum vapor deposition film on the outer side is laminated. According to Patent Literature 2, by using a composite material including a paper base material for the barrel, it is possible to provide a writing implement capable of achieving low pollution while maintaining durability.

Further, Patent Literature 3 discloses a liquid storage member for coating implements having at least three layers including a paper base material laminate including an inner layer of a paper base material, and an intermediate layer which is formed on an outer peripheral surface of the inner layer and is a metal layer or a silica deposition layer, and an outer layer which is formed on an outer peripheral surface of the intermediate layer and is made of a paper base material. In the liquid storage member, the paper base material laminate and the outer layer are spirally wound in contact with each other so that the adjacent surfaces thereof do not overlap each other, and the joint between the outer layers and the joint between the paper base material laminates are spaced from each other by a 1mm or more and a half or less of the widths of the outer layers, thereby preventing ink leakage.

Patent Literature 4 discloses an ink storage member for writing implements in which an ink storage tube is formed using paper as a base material, and one end portion of the ink storage tube is connected to a connection portion formed in a writing member or a relay member supporting the writing member. In the ink storage member, the connecting portion of the relay member for supporting the writing member is provided with a locking means capable of securing a certain connection strength with respect to the ink storage tube, thereby providing a practical writing implement.

### Citation List

### Patent Literature

Patent Literature 1: JP 2001-146091 A
Patent Literature 2: JP S62-70097 A
Patent Literature 3: JP 2021-16976 A
Patent Literature 4: JP 2020-172044 A

### Summary of Invention

### Technical Problem

However, since any of the ink storage members uses paper as a base material, a composite material in which a synthetic resin or a metal such as aluminum is laminated is used in order to impart strength, gas barrier properties, and the like to the paper base material. For example, there are many kinds of alloys of aluminum, and it is not easy to take out high-purity aluminum, which is a problem in terms of recyclability. Therefore, there is room for further consideration reduction in environmental load.

An object of the present invention is to provide a liquid storage member for coating implements in which the influence on the environment is further reduced by replacing conventional aluminum with a specific silica film as a material of an intermediate layer interposed between an inner layer and an outer layer, both of which have paper as a base material, in a paper-made refill for writing implements.

### Solution to Problem

The ink storage member for writing implements according to the present invention comprises at least three layers including an inner layer of a paper base material, an intermediate layer formed on an outer surface of the inner layer, and an outer layer of the paper base material formed on an outer surface of the intermediate layer, wherein the intermediate layer has at least one layer selected from the group consisting of an aluminum oxide film layer, a silica film layer formed from a low molecular weight silane, and a silica film layer formed from a polysilazane.

The intermediate layer preferably has an aluminum oxide film layer, a silica film layer formed from a low molecular weight silane, or a silica film layer formed from polysilazane on one surface or both surfaces of a paper base material.

It is preferable that the inner layer and the intermediate layer, or the intermediate layer and the outer layer are bonded to each other with an olefin-based adhesive or a silane coupling agent.

At least one of the paper base materials forming the inner layer and the outer layer is preferably glassine paper.

### Effect of the invention

In the present invention, by using at least one layer selected from the group consisting of an aluminum oxide film layer, a silica film layer obtained by reacting a low molecular weight silane, and a silica film layer obtained by reacting a polysilazane as an intermediate layer between an inner layer and an outer layer, each of which is made of a paper base material, as compared with a conventional writing implement using aluminum for the intermediate layer, high water repellency and durability can be imparted to the ink storage member. The silica film layer is a silica coating obtained by reacting low molecular weight silane or polysilazane on the surface of the paper base material.

The intermediate layer may have a form in which a layer of an aluminum oxide film or a silica film is provided on one surface or both surfaces of a paper base material. The silica coating adheres strongly to the paper base material layer.

By using a cyclic olefin polymer as an adhesive between the inner layer, the intermediate layer, or the outer layer, it is possible to impart high gas barrier properties to the ink storage member.

According to the present invention, it is possible to provide an ink storage member for writing implements in which the environmental load is further reduced.

### Brief Description of Drawings

[Figure 1] FIG. 1 shows an embodiment in which an adhesive layer is provided between an inner layer and an intermediate layer and between an inner layer and an outer layer in an ink storage member for writing implements.
[Figure 2] FIG. 2 shows an embodiment of the configuration of a refill including an ink storage member for writing implements of the present invention. FIG. 2 (a) is a front view of the appearance of the refill, and FIG. 2 (b) is a cross-sectional view of the refill taken along line A-A'.

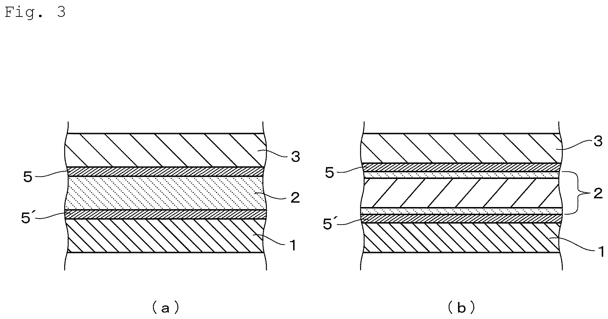

[Figure 3] FIG. 3 shows a three-layer structure or a five-layer structure of an inner layer, an intermediate layer, and an outer layer constituting an ink storage member for writing implements of the present invention. FIG. 3(a) shows an embodiment in which an adhesive layer is provided between a paper base material layer and a silica film layer (or an aluminum oxide film layer) in a three-layer structure of the paper base material layer, the silica film layer (or the aluminum oxide film layer), and FIG. 3(b) shows a schematic cross-sectional view of an embodiment of Examples 1 to 4, and shows an embodiment in which an adhesive layer between an inner layer and an intermediate layer and between the intermediate layer and an outer layer in a five-layer structure having the inner layer made of a paper base material, the intermediate layer having a silica film layer (or an aluminum oxide film layer) on both surfaces of the paper base material layer, and the outer layer made of a paper base material.

### Description of Embodiments

The ink storage member for writing implements of the present invention will be described in detail below with reference to the drawings.

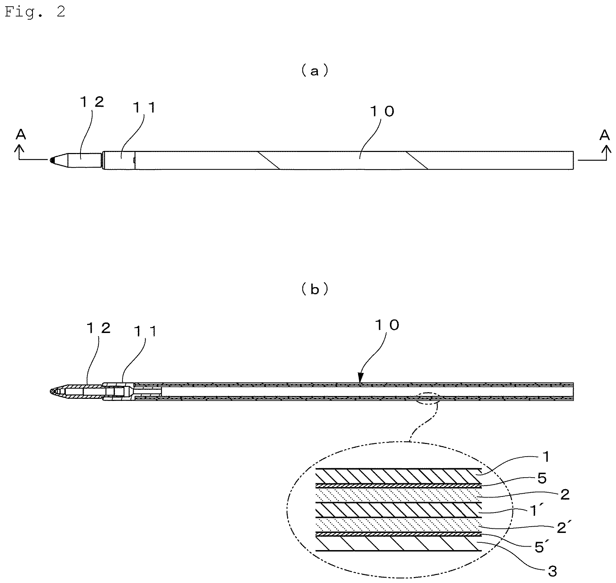

FIG. 2 is a diagram showing an embodiment of the configuration of a refill including the ink storage member 10 for writing implements of the present invention, in which FIG. 2(a) is a front view of an appearance of the refill, and FIG. 2(b) is a cross-sectional view taken along line A-A' of the refill.

In FIG. 2, for example, the refill comprises a barrel of a ballpoint pen which comprises an ink storage member 10 for writing implements (hereinafter, also simply referred to as "ink storage member 10"), which is an elongated cylindrical ink storage tube made of paper as a base material and stored ink (not shown), and a joint 11 attached to the tip of the ink storage member 10, and a ballpoint pen tip 12 attached to the tip of the joint 11 as a writing member.

Specifically, the joint 11 is formed with a cylindrical rear end portion joined to the ink storage member 10 and a cylindrical front end portion having an outer diameter larger than that of the rear end portion, and the ballpoint pen tip 12 is attached to the front end portion. Further, an adhesive is applied in advance to the rear end portion of the joint 11 in order to give a certain bonding strength to the bonding portion with the ink storage member 10, and in this state, the rear end portion of the joint 11 is press-fitted into the front end of the ink storage member 10, thereby bonding the joint 11 and the ink storage member 10. Accordingly, the ink storage member 10 and the ballpoint pen tip 12 are connected to each other via the joint 11 so that the ink can flow.

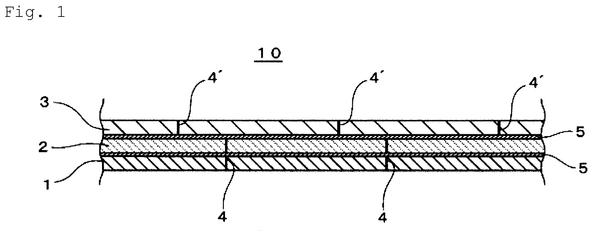

The ink storage member 10 for writing implements has at least three layers comprising an inner layer 1 of a paper base material, an intermediate layer 2 formed on the outer surface of the inner layer 1, and an outer layer 3 of the paper base material formed on the outer surface of the intermediate layer 2. Therefore, the ink storage member 10 for writing implements may have, for example, a four-layer structure in which the outer layer 3 is further stacked on the three-layer structure, or a six-layer structure in which a three-layer structure including the inner layer 1, the intermediate layer 2, and the outer layer 3 are stacked twice. FIG. 1 shows an embodiment in which an adhesive layer 5 is provided between the inner layer 1 and the intermediate layer 2 and / or between the intermediate layer 2 and the outer layer 3 in the ink storage member 10 having a three-layer structure.

As the paper base material constituting the inner layer 1 and the outer layer 3, various known materials such as high-quality paper, medium-quality paper, one side glossy paper, kraft paper, one side glossy kraft paper, bleached kraft paper, paperboard, white board, liner, fine coated paper, coated paper, art paper, cast-coated paper, glassine paper, and parchment paper can be used. These paper base materials may be used alone or in combination of two or more.

Among these paper base materials, glassine paper having high density, high transparency, oil resistance, and water resistance is preferable. The glassine paper is obtained by highly beating pulp to make paper, subjecting the paper to high-pressure processing with a super calender, and compressing, smoothing, and densifying the fibers of the pulp, and its thickness is usually 20 to 50 µm. The thickness of the glassine paper is preferably 20 to 60 µm when used for the inner layer 1, and preferably 20 to 200 µm when used for the outer layer. The glassine paper preferably has a density of 0.8 g/cm³ or more.

In order to impart water repellency, silicone oil or the like may be applied to the inner side of the inner layer 1 that comes into contact with ink.

The intermediate layer 2 is a layer having an aluminum oxide film layer or a silica film layer. The silica film layer is formed using polysilazane or low molecular weight silane as a precursor. FIG. 3(a) schematically shows an embodiment in which the intermediate layer 2 between the inner layer 1 and the outer layer 3 is a silica film.

The intermediate layer 2 may have a layer of an aluminum oxide coating or a silica coating on one side or both sides of a paper base material. FIG. 3(b) is a schematic cross-sectional view of an embodiment of Examples 1 to 4, and schematically shows an embodiment in which the intermediate layer 2 between the inner layer 1 and the outer layer 3 is a layer having an aluminum oxide film layer or a silica film layer containing a paper base material.

As the paper base material, a paper base material constituting the inner layer 1 and the outer layer 3 is used.

Polysilazane includes perhydropolysilazane which forms an inorganic film and organic polysilazane which forms an inorganic-organic hybrid film having higher film performance.

Perhydropolysilazane is an organic solvent-soluble inorganic polymer composed only of Si-H bonds, N-H bonds, and Si-N bonds. The perhydropolysilazane reacts with moisture in the air to introduce a silyl group, and is condensed while generating ammonia to form an amorphous silica film having high hardness. As commercial products of perhydropolysilazane, for example, coating solutions obtained by dissolving perhydropolysilazane in organic solvents, such as Durazane2800 (manufactured by Merck & Co., Inc.) and Durazane2200 (manufactured by Merck & Co., Inc.), are known.

The organic polysilazane (also referred to as organopolysilazane) is, for example, methylpoly silazane or dimethyl polysilazane. Examples of the organic polysilazane include commercially available products such as Durazane1033 (manufactured by Merck & Co., Inc.) and Durazane1500 RC (manufactured by Merck & Co., Inc.).

The perhydropolysilazane and the organic polysilazane are prepared by dissolving a solution in a volatile organic solvent such as an aromatic or cycloaliphatic solvent, an ether or a halogenated hydrocarbon, and a dip coating method or a spin coating method is used to coat it on the surfaces of the inner layer 1 and the outer layer 3, and heat treatment is performed at 150 to 180 °C. to form a silica coating film.

Since the silica coating formed by using the polysilazane is brittle due to its high hardness, the silica coating is preferably 300 to 1300 µm and particularly preferably 500 to 900 µm thick.

The low molecular weight silane has a plurality of organic functional groups and hydrolyzable alkoxy groups in the molecule, and forms an amorphous silica coating by dehydration crosslinking. Since low molecule weight silane is a low molecule, it permeates minute unevenness of the surface of the inner layer 1 and the outer layer 3 easily compared with polysilazane, and it sticks it to the inner layer 1 and the outer layer 3 by a strong anchor effect. The silica layer formed using the low molecular weight silane is preferably 30 to 1000 µm and particularly preferably 500 to 900 µm thick.

Even when a polysilazane and a low molecular weight silane are used, a silica coating film, which is a reaction product of the polysilazane and the low molecular weight silane, has higher gas barrier properties than a silica deposited film.

A layer made from an adhesive (hereinafter, referred to as an "adhesive layer 5") may be provided between the inner layer 1 and the intermediate layer 2 and between the intermediate layer 2 and the outer layer 3.

The adhesive is preferably an olefin-based adhesive or a silane coupling agent. The olefin-based adhesive or the silane coupling agent serves as an adhesive for bonding each of the inner layer 1, the intermediate layer 2, and the outer layer 3, and also serves to reinforce the paper base material.

The olefin-based adhesive is an adhesive made from a polyolefin resin such as a polyethylene-based ionomer, a polyethylene elastomer, a high-density polyethylene, a low-density polyethylene, a polypropylene ionomer, a polypropylene elastomer, and a cyclic olefin polymer. The polyolefin resin also includes a modified polyolefin resin such as maleic anhydride-modified polypropylene. Among these polyolefin resins, a cyclic olefin polymer is preferable in that gas barrier properties can be imparted.

The cyclic olefin polymer is, for example, a cycloolefin polymer such as a polymer obtained by ring-opening polymerization of norbornenes and hydrogenation, or a cycloolefin copolymer such as a copolymer of tetracyclododecene and an olefin such as ethylene.

As the olefin-based adhesive, one kind or a combination of two or more kinds selected from the polyolefin resins may be used.

The olefin-based adhesive may be directly applied to the inner layer 1 and the outer layer 3, or may be used in the form of a dispersion-type or emulsion-type resin liquid containing a polyolefin resin as a base polymer. If necessary, a silane coupling agent described below may be added to the resin liquid.

The silane coupling agent is a compound having both a site that reacts with an organic compound and a site that reacts with an inorganic compound. The silane coupling agent bonds the interface between the paper base material of the inner layer 1 or the outer layer 3 and the silica coating of the intermediate layer 2 by a chemical bond, thereby preventing the penetration of water and improving the durability and weather resistance of the ink storage member 10. Examples of suitable silane coupling agents include epoxy-based, vinyl-based, styryl-based, methacryl-based, acryl-based, amino-based, isocyanurate-based, ureido-based, mercapto-based, isocyanate-based, and acid anhydride-based silane coupling agents. In particular, Vinyltrimetoxysilane, vinyltriethoxysilane, and p-styryl trimethoxysilane , 3-glycidoxypropylmethyldimetoxysilane, 3-glycidoxypropyltrimetoxysilane, 3-glycidoxy propyl methyldiethoxysilane, 3-glycidoxypropyltriethoxysilane, Hydrochloride of 2-(3,4-epoxycyclohexyl)ethyltrimethoxysilane , N-2-(aminoethyl)-3-aminopropyl methyldimethoxysilane , N-2-(aminoethyl)-3-aminopropyltrimethoxysilane , N-phenyl-3-aminopropyltrimethoxysilane , N-(vinylbenzyl ester)-2-aminoethyl-3-aminopropyltrimethoxysilane , 3-aminopropyltrimethoxysilane , 3-aminopropyltriethoxysilane , 3-methacryloxy propylmethyldimethoxysilane 3-methacryloxy propyltrimethoxysilane , 3-methacryloxy propylmethyldiethoxysilane , 3-methacryloxy propyltriethoxysilane , 3-acryloxypropyltrimethoxysilane, 3-triethoxysilyl-N-(1,3-dimethyl-butyliden)propylamine , tris (trimethoxysilylpropyl) isocyanurate, 3-ureidopropyl trialkoxy silane 3-mercaptopropyl ester methyldimethoxysilane , 3-mercaptopropyl ester trimethoxysilane , 3-isocyanatopropyltriethoxysilane, 3-trimethoxysilylpropyl succinic acid anhydride and the like can be used.

For example, when adhering the inner layer 1 and the intermediate layer 2 using olefin-based adhesive or a silane coupling agent, adhesives are applied so that it may heap up near the center of the inner layer 1 or the intermediate layer 2. Then, the inner layer 1 and the intermediate layer 2 are pressed against each other and the adhesive is spread over the whole bonding surface to bond both the layers so as not to leave air bubbles in the bonding part and not to a defective bonding part. After the inner layer 1 and the intermediate layer 2 are laminated, they are pressed and fixed until the adhesive is cured.

The adhesive is applied to the inner layer 1 or the intermediate layer 2 in an amount of about 5 to 50 g/m², preferably 5 to 25 g/m².

The ratio of the thicknesses (µm) of the inner layer 1, the intermediate layer 2, and the outer layer 3 is usually 20-60:300-1000:20-200, and preferably 20-30:500-900:50-200.

The ratio of the thicknesses of the paper base material of the inner layer 1 or the outer layer 3 and the layer formed from the aluminum oxide film or the silica film of the intermediate layer 2 is about 2/1 to 1200/1. For example, the total of the thicknesses of the inner layer 1 and the outer layer 3 is 40 to 260 µm, and the thicknesses of the intermediate layer 2 is 300-1300 µm.

The laminated paper in which the inner layer 1, the intermediate layer 2 and the outer layer 3 are laminated in this order is cut into widths of 4 to 20 mm by a bobbin slitter or the like to form a belt-like sheet. Next, the belt-like sheet is formed while being rounded into a cylindrical shape by using a spiral machine or the like. The term "forming into a cylindrical shape" means that one or a plurality of, for example, 2 to 4 sheets of the laminated paper cut into a predetermined width are wound around a core rod to form a laminated cylindrical shape. The belt-like sheet is wound around a mandrel (paper tube manufacturing machine) so that the inner layer 1 is on the inside. Examples of the winding method include a method of winding the sheet around the core rod in a spiral shape (spiral winding) and a method of winding the sheet around the core rod at a right angle (flat winding). From the viewpoint of strength, spiral winding is preferable. In order to facilitate the removal of the mandrel, it is preferable to treat the surface of the mandrel with an appropriate lubricant in advance or to apply an appropriate amount of lubricant to the surface of the inner layer 1 on the side to be wound around the mandrel. When two or more layers of the laminated paper are laminated, an adhesive is applied to the outer layer 3, and the laminated paper is spirally wound so that the inner layer 1 of the laminated paper is positioned inside.

In order to wind the laminated paper around the mandrel in a spiral shape, it is more preferable to form the laminated paper into a belt-like sheet having a length of 5 to 15 mm. When the spiral winding is performed using such a wide bonded paper, it is possible to reach the required length of the liquid storage member 10 without winding many times. As a result, the number of contact surfaces between the bonded papers is small, and it is possible to suppress the leakage of the ink stored in the ink storage member 10.

With the preferable form of the ink storage member 10 of the present invention, it has the structure which contacted the laminated paper so that the contact surfaces might not lap, and wound it around spiral shape along with the longitudinal direction of the ink storage member 10 as aforementioned. Even if the adjacent surfaces overlap each other at the contact portion between the bonded sheets, that is, at the seams 4 and 4', the overlap of the adjacent surfaces is the maximum 1 mm. Leakage of ink from the seams 4 and 4' can be suppressed by bringing the seams 4 and 4' into contact with each other so as not to overlap each other or by setting the overlapping widths to the maximum 1mm. If the overlapping widths of the seams 4 and 4' exceed the 1 mm, a step is formed in the overlapping portion, and ink may leak.

In the case of winding another laminated paper on the surface of the spirally wound laminated paper, it is preferable that another laminated paper is also wound with the adjacent surfaces thereof being in contact with each other. However, when two or more layers of laminated paper are wound, there is no problem of liquid leakage even if the seams of the laminated paper, which is the outermost layer of the ink storage member 10, overlap to some extent.

The ink storage member 10 is completed by cutting the cylindrical molded body from which the mandrel has been pulled out to a required predetermined length and drying the molded body at an appropriate temperature and humidity for several hours.

The dimensions of the ink storage member 10 are those used in ordinary writing implements and are not particularly limited, but are generally 1.5 to 5 mm in inside diameters, 1.8 to 10 mm in outside diameters, and 30 to 150 mm in lengths.

The tensile strength of the ink storage member 10 is preferably 3.5 kN/m or more, more preferably 4.5 kN/m or more, and even more preferably 5.5 kN/m or more, from the viewpoint of obtaining excellent strength. The tensile strength is measured by a tensile strength test method specified in JIS P 8113:2006.

The writing implements of the present invention are, for example, a fountain pen, a ball-point, a marking pen, a felt-tip pen, a felt pen, a correcting implement, a brush pen, or the like. At this time, the ink stored in the ink storage member 10 may be either an aqueous (gel) ink or an oil-based ink, and an ink for a ballpoint pen, a marking pen, or the like is appropriately used depending on the type of the pen.

### Examples

Hereinafter, the present invention is described in more detail based on Examples, but the present invention is not limited to the following Examples.

The ink storage member of the present invention was evaluated by the following method.

### (1) Bending Test

The center of the paper tube 1 was bent at 64 mm and pressed at a rate of 100 mm/min by a wedge tool, and the measurement value when buckled was taken as the flexural strength.

The flexural strength of 4.0 N or more was evaluated as A, that of more than 2.0 N and less than 4.0 N was evaluated as B, and that of 2.0 N or less was evaluated as C.

### (2) Tensile Strength

The tensile strength was measured using a horizontal tensile tester (manufactured by Kumagai Riki Kogyo Co., Ltd.) according to the tensile strength test method defined in JIS P 8113:2006.

The tensile strength of 3.5 kN/m or more was evaluated as A, that of more than 1.5 kN/m and less than 3.5 kN/m was evaluated as B, and that of 1.5 kN/m or less was evaluated as C.

### [Example 1]

A solution in which 15 g of Tetraethoxysilane (manufactured by Tokyo Chemical Industry Co., Ltd.) as low molecular weight silane and 15 g of organic polysilazane (Durazane1500RC; manufactured by Merck & Co., Inc.) were dissolved in dibutyl ether was applied to the entire front and back surfaces of high-quality paper (Shirai; manufactured by Nippon Paper Industries Co., Ltd.) and heated at 180° C. to form a silica coating.

Next, an olefin-based adhesive (Chemipearl S500; manufactured by Mitsui Chemicals, Inc.) was applied onto the silica coating formed on both surfaces of the high-quality paper, and two sheets of 25 µm thick glassine papers (basis weights: 25 g/m², densities: 1.0 g/cm³) were bonded to each other so as to be sandwiched therebetween, thereby producing a laminated paper having a laminated structure composed of the glassine paper, the silica coating, the high-quality paper, the silica coating, and the glassine paper. The thickness of the laminated paper was 791 µm, the total thickness of the silica coatings was 571 µm, and the total thickness of the adhesive layers was 8.5 µm.

The laminated paper was cut into 13 mm widths with a bobbin slitter.

The strip-shaped laminated paper was wound around the outer peripheral surface of a mandrel of a paper tube manufacturing machine (Langston) to produce a spiral cylindrical body. At this time, each of the laminated papers was wound so that the adjacent were butt-to-butt without overlapping.

The obtained spiral tube was cut to a length of 89.3 mm to obtain an ink storage member having an inside diameter of 3 8 mm.

The results are shown in Table 1. Both the bending strength and the tensile strength were A.

### [Example 2]

A laminated paper was produced in the same manner as in Example 1, except that 3-glycidoxypropyltrimethoxysilane (KBM-1083; manufactured by Shin-Etsu Silicone Co., Ltd.) was used as a silane coupling agent instead of the olefin-based adhesive in Example 1.

In the same manner as in Example 1, a spiral cylindrical body was produced and cut to obtain an ink storage member.

The results are shown in Table 1. Both the bending strength and the tensile strength were A.

### [Example 3]

A laminated paper was produced in the same manner as in Example 1, except that not only the olefin-based adhesive but also an olefin-based adhesive (manufactured by Chemipearl S500 Mitsui Chemicals, Inc.) and 3-methacryloxy propylmethyldimethoxysilane (KBM-502: manufactured by Shin-Etsu Silicone Co., Ltd.) as a silane-coupling agent were used in combination.

In the same manner as in Example 1, a spiral cylindrical body was produced and cut to obtain an ink storage member.

The results are shown in Table 1. Both the bending strength and the tensile strength were A.

### [Example 4]

A solution in which 15 g of Tetraethoxysilane (manufactured by Tokyo Chemical Industry Co., Ltd.) as low molecular weight silane and 15 g of organic polysilazane (Durazane1500RC; manufactured by Merck & Co., Inc.) were dissolved in dibutyl ether was applied to one surface of high-quality paper (Shirai; manufactured by Nippon Paper Industries Co., Ltd.) and heated at 180° C. to form a silica coating.

Next, an aluminum oxide film was formed on the other surface of the high-quality paper by sputtering.

A resin liquid containing an olefin-based adhesive (Chemipearl S500; manufactured by Mitsui Chemicals, Inc.) and 3-methacryloxy propylmethyldimethoxysilane (KBM-502: Shin-Etsu Silicone Co., Ltd.) was applied to surfaces of the silica coating and the aluminum oxide film on the high-quality paper, and two sheets of 25 µm thick glassine papers (basis weights: 25 g/m², densities: 1.0 g/cm³) were bonded to each other so as to be sandwiched therebetween, thereby producing a laminated paper having a laminated structure composed of the glassine paper, the silica coating, the high-quality paper, the aluminum oxide film, and the glassine paper. The thickness of the laminated paper was 785 µm, the thickness of the silica coating was 456 µm, the thickness of the aluminum oxide film was 114 µm, and the total thickness of the adhesive layers was 8.5 µm.

In the same manner as in Example 1, a spiral cylindrical body was produced and cut to obtain an ink storage member.

The results are shown in Table 1. Both the bending strength and the tensile strength were A.

### [Comparative Example 1]

A silica vapor deposition film having a thickness of 10 µm was formed on the entire front surface and back surface of high-quality paper (Shirai; manufactured by Nippon Paper Industries Co., Ltd.).

Next, an olefin-based adhesive (manufactured by Chemipearl S500 Mitsui Chemicals, Inc.) was applied onto the silica vapor deposited layers formed on both surfaces of the high-quality paper, and two sheets of 25 µm thick glassine papers (basis weights: 25 g/m², densities: 1.0 g/cm³) were bonded to each other so as to be sandwiched therebetween, thereby producing a laminated paper having a laminated structure composed of the glassine paper, the silica vapor deposited layer, the high-quality paper, and the silica vapor deposited layer. The thickness of the laminated paper was 757 µm, the total thickness of the silica vapor deposited layers was 610 µm, and the total thickness of the adhesive layers was 6.1 µm.

The laminated paper was cut into 13 mm widths with a bobbin slitter.

In the same manner as in Example 1, a spiral cylindrical body was produced and cut to obtain an ink storage member.

In the ink storage member of Comparative Example 1, since the intermediate layer 2 was the silica vapor deposited film, sufficient strength was not obtained as compared with the ink storage members 10 of Examples 1 to 3.

### [Reference Example]

A laminated paper was produced in the same manner as in Comparative Example 1, except that an aluminum foil having a thickness of 6.5 µm, instead of the silica vapor deposition layer, was bonded to the entire front surface and back surface of the high-quality paper (Shirai; manufactured by Nippon Paper Industries Co., Ltd.), and a laminated paper having a laminated structure comprising a glassine paper, an aluminum foil, a high-quality paper, an aluminum foil and a glassine paper was produced. The total thickness of the laminated paper was 732 µm, the total thickness of the aluminum foils was 602 µm, and the total thickness of the adhesive layers was 6.5 µm.

The laminated paper was cut into 13 mm widths with a bobbin slitter.

In the same manner as in Example 1, a spiral cylindrical body was produced and cut to obtain an ink storage member.

The ink storage member of Reference Example in which the intermediate layer 2 is the aluminum foil is equivalent to the ink storage member 10 of Examples 1 to 4 in terms of performance. However, aluminum has problems in terms of environmental load and recyclability, and consideration of an alternative material is a problem.

Table 1 shows the materials and the evaluation results of the ink storage members in Examples 1 to 4, Comparative Example 1, and Reference Example.

### [Table 1]

**Table 1**

| | Example 1 | Example 2 | Example 3 | Example 4 | Comparative Example 1 | Reference Example |
|---|---|---|---|---|---|---|
| Intermediate layer | Low molecular weight silane | Low molecular weight silane | Low molecular weight silane | Low molecular weight silane | Silica deposition film | Aluminum foil |
| | Polysilazane | Polysilazane | Polysilazane | Aluminum oxide | | |
| Adhesive | olefin-based adhesive | Silane coupling agent | olefin-based adhesive /Silane coupling agent | olefin-based adhesive /Silane coupling agent | olefin-based adhesive | olefin-based adhesive |
| Bending strength | A | A | A | A | B | A |
| Tensile strength | A | A | A | A | C | A |

In the present embodiment, as an example, the intermediate layer 2 in which the silica film layer or the aluminum oxide film layer is formed on both surfaces of the paper base material is configured as one layer, but the present invention is not limited thereto. The number of layers of the intermediate layer 2 may be, for example, two or three or more depending on the use conditions and product specifications (material, dimensions, and the like) of the writing implement. In this case, at least one of the layers (innermost layer and intermediate layer) other than the outermost layer in the intermediate layer 2 may be a paper base material layer. Furthermore, as for the adhesive layer that adheres each layer of the intermediate layer 2, it is only necessary to prevent the ink from leaking to the outside of the ink storage member 10, and it is sufficient that the number of the adhesive layers is one or more in the layers other than the outermost layer (the innermost layer and the intermediate layer).

### Reference Signs List

10 Ink storage member for writing implements
11 Joint
12 Ballpoint pen tip
1, 1' Inner layer
2, 2' Intermediate layer
3 Outer layer
4, 4' Seam
5 Adhesive layer

## Claims

1. An ink storage member for writing implements, comprising at least three layers including an inner layer of a paper base material, an intermediate layer formed on an outer surface of the inner layer, and an outer layer of the paper base material formed on an outer surface of the intermediate layer, wherein the intermediate layer has at least one layer selected from the group consisting of an aluminum oxide film layer, a silica film layer formed from a low molecular weight silane, and a silica film layer formed from a polysilazane.

2. The ink storage member for writing implements according to claim 1, wherein the intermediate layer has an aluminum oxide film layer, a silica film layer formed from a low molecular weight silane, or a silica film layer formed from a polysilazane on one surface or both surfaces of a paper base material.

3. The ink storage member for writing implements according to claim 1 or 2, wherein the inner layer and the intermediate layer, or the intermediate layer and the outer layer are bonded to each other with an olefin-based adhesive or a silane coupling agent.

4. The ink storage member for writing implements according to claim 1 or 2, wherein at least one of the paper base materials forming the inner layer and the outer layer is glassine paper.
